# EUROPÄISCHE PATENTSCHRIFT

(11) **EP 1 017 631 B1**
(45) Veröffentlichungstag und Bekanntmachung des Hinweises auf die Patenterteilung: **24.10.2001**
(21) Anmeldenummer: 98954185.9
(22) Anmeldetag: 17.09.1998
(51) Int. Cl.: C02F 1/32, B01J 19/12

(54) **VERFAHREN UND VORRICHTUNG ZUR UV-BESTRAHLUNG FLÜSSIGER MEDIEN, INSBESONDERE VON VORGEREINIGTEM ABWASSER**
DEVICE AND METHOD FOR EXPOSING LIQUIDS, INCLUDING PRETREATED WASTEWATER, TO X-RAYS
DISPOSITIF ET PROCEDE D'EXPOSITION DE LIQUIDES AUX RAYONS X, NOTAMMENT D'EAUX USEES PRETRAITEES

(30) Priorität: 18.09.1997 DE 19740986
(43) Veröffentlichungstag der Anmeldung: 12.07.2000
(73) Patentinhaber: WEDECO AG Water Technology, 40472 Düsseldorf (DE)
(72) Erfinder: WEDEKAMP, Horst, D-32052 Herford (DE)
(74) Vertreter: Patentanwälte Thömen & Körner
(86) Internationale Anmeldenummer: DE9802760
(87) Internationale Veröffentlichungsnummer: WO9914161

(56) Entgegenhaltungen:
- EP-A- 0 317 735
- WO-A-94/20208
- DE-A- 4 134 711
- DE-A- 4 206 596
- US-A- 4 367 410
- US-A- 5 124 131

## Beschreibung

Die Erfindung betrifft eine Vorrichtung zur UV-Bestrahlung flüssiger Medien gemäß dem Oberbegriff des Patentanspruchs 1, und außerdem befaßt sich die Erfindung mit einem Verfahren zur UV-Bestrahlung flüssiger Medien.

Eine Vorrichtung zur UV-Bestrahlung flüssiger Medien sowie auch ein Verfahren für die UV-Bestrahlung flüssiger Medien sind durch das Dokument WO 94/20208 bekannt. Diese Vorrichtung umfaßt in Fließrichtung des flüssigen Mediums eine Einlaufkammer, eine Bestrahlungskammer und eine Auslaufkammer. In der Bestrahlungskammer befinden sich UV-Strahlungsquellen, die durch UV-Strahlerlampen gebildet sind, die von Schutzrohren umgeben sind, welche für UV-Strahlung durchlässig sind, und welche die UV-Strahlerlampen gegen die Flüssigkeit abschirmen. Die UV-Strahlungsquellen erstrecken sich in Reihen nebeneinander und/oder übereinander parallel zur Fließrichtung des flüssigen Mediums.

Bei der bekannten Vorrichtung ist die Bestrahlungskammer als eine allseits geschlossene Kammer nach Art eines Rohres ausgebildet. Durch diese Bestrahlungskammer bzw. durch dieses Rohr wird das flüssige Medium mit einem gewissen Druck gepreßt. Dies führt zu einer erhöhten Strömungsgeschwindigkeit in der Bestrahlungskammer.

Mit der bekannten Vorrichtung ist zwar eine UV-Bestrahlung flüssiger Medien und insbesondere auch eine UV-Bestrahlung von vorgereinigtem Abwasser möglich, jedoch hat sich gezeigt, daß die Ausbildung der Bestrahlungskammer als allseits geschlossene Kammer aufwendig und teuer ist.

In der Praxis lassen sich demgegenüber solche Vorrichtungen preiswerter herstellen, welche nach Art eines nach oben offenen Gerinnes bzw. Kanals ausgebildet sind, bei welchen also die Bestrahlungskammer nicht allseits geschlossen, sondern nach oben hin offen ist. Allerdings besteht der Nachteil, daß bei einem offenen Gerinne nur geringe Strömungsgeschwindigkeiten des flüssigen Mediums und somit nur eine geringe Leistungsfähigkeit erzielt werden kann.

In dem Dokument DE-A-42 06 596 A1 sind in der dortigen Beschreibungseinleitung Vorrichtungen mit einem offenen Gerinne erwähnt, und es ist dort beschrieben, daß solche Vorrichtungen Mängel aufweisen, ohne daß diese Mängel näher definiert sind. Deshalb wird in dem genannten Dokument DE-A-42 06 596 vorgeschlagen, zumindest die UV-Strahlungsquellen abzudecken und einen geschlossenen Durchflußkanal zu bilden, der keine freie Wasseroberfläche besitzt. Mit einem Überstromwehr wird erreicht, daß die Unterseite der Abdeckung stets unter dem aufgestauten Wasserstand liegt, so daß bei allen Durchflußmengen die UV-Strahlungsquellen von dem flüssigen Medium ohne Lufteinschluß benetzt sind.

Der Erfindung liegt die Aufgabe zugrunde, eine Vorrichtung zur UV-Bestrahlung flüssiger Medien-anzugeben, welche auch bei einem offenen Gerinne hohe Strömungsgeschwindigkeiten und somit einen verbesserten Wirkungsgrad beim Betrieb der Vorrichtung ermöglicht, und welche gleichwohl preiswert und wirtschaftlich in der Herstellung ist und sich auch einfach bedienen läßt, wobei unter einer einfachen Bedienung auch der Umstand zu berücksichtigen ist, daß einzelne UV-Strahlungsquellen in gewissen Zeitabständen ausgewechselt und erneuert werden müssen und zu diesem Zweck leicht zugänglich sein sollen. Außerdem soll durch die Erfindung ein vereinfachtes und verbilligtes Verfahren zur Verrichtung einer UV-Bestrahlung flüssiger Medien geschaffen werden.

Im Hinblick auf die Vorrichtung erfolgt die Lösung der Aufgabe durch die Merkmale des Patentanspruchs 1.

Bei der Erfindung ist vorgesehen, die komplette Vorrichtung nach Art eines oben offenen kanalartigen und vorzugsweise rechteckigen Gerinnes auszubilden, so daß auch die Bestrahlungskammer oben offen ist. Dadurch sind die UV-Strahlungsquellen für Reparaturzwecke leicht zugänglich.

Zwischen der Einlaufkammer und der Bestrahlungskammer ist quer zur Fließrichtung des flüssigen Mediums eine Stauwand vorgesehen, deren Abmessungen so gewählt sind, daß die Stauwand den Querschnitt des Gerinnes teilweise abdeckt, wobei sich die Stauwand über die gesamte Breite des Gerinnes erstreckt und wobei sich die untere Kante der Stauwand im Abstand von der Sohle des Gerinnes befindet. Dadurch wird eine Ausflußöffnung für das flüssige Medium von der Einlaufkammer zur Bestrahlungskammer gebildet.

Diese Ausflußöffnung ist bei der Erfindung so bemessen, daß sich bei erhöhendem Durchfluß des flüssigen Mediums und bei Erreichen einer Strömungsgeschwindigkeit ab 1 m/sec das flüssige Medium vor der Ausflußöffnung anstaut. Dadurch nimmt das flüssige Medium in der Einlaufkammer einen Flüssigkeits-Spiegel ein, der größer ist als die Spiegelhöhe des flüssigen Mediums in der Bestrahlungskammer.

Aufgrund des erhöhten Pegels bzw. der Spiegelhöhe in der Einlaufkammer und aufgrund der angestauten Flüssigkeit stellt sich ein erhöhter Druck ein, der dazu führt, daß das flüssige Medium mit erhöhter Geschwindigkeit durch die Bestrahlungskammer fließt.

Zwar ist eine entsprechende erhöhte Geschwindigkeit des flüssigen Mediums in der Bestrahlungskammer auch bei der bekannten Vorrichtung mit der allseits geschlossenen Bestrahlungskammer möglich, jedoch ist eine solche erhöhte Geschwindigkeit bisher bei Vorrichtungen, die als offenes Gerinne ausgebildet sind, nicht möglich gewesen. Bis zu geringen Strömungsgeschwindigkeiten von kleiner als ewa 1 m/sec arbeitet bei der Erfindung das offene Gerinne praktisch ohne die Stauwand, d. h., bis zu Strömungsgeschwindigkeiten von etwa 1 m/sec ist ein Betrieb ohne-die Stauwand möglich. Wenn sich jedoch aufgrund einer größeren anfallenden Menge des flüssigen Mediums die Strömungsgeschwindigkeit erhöht, kommt es zu dem beschriebenen Stau vor der Stauwand in der Einlaufkammer, mit der vorteilhaften Wirkung, daß sich in der Bestrahlungskammer größere Strömungsgeschwindigkeiten einstellen.

Ein weiteres Merkmal der Erfindung besteht darin, daß das untere Teilstück der Stauwand in Fließrichtung des flüssigen Mediums in einem Winkel von kleiner als 90 Grad gebogen ist, wodurch eine schräg zur Fließrichtung verlaufende Fläche gebildet wird. Diese schräge Fläche bildet praktisch einen Strömungsgleichrichter, der zu einer Beruhigung bzw. einer gerichteten Fließrichtung des flüssigen Mediums führt.

Bei der Erfindung schließt sich an die schräge Fläche ein waagerecht und parallel zur Fließrichtung des flüssigen Mediums verlaufendes kurzes Ausfluß-Leitblech an. Durch dieses Ausfluß-Leitblech wird der Pegel bzw. die Spiegelhöhe des flüssigen Mediums in der Bestrahlungskammer vorgegeben, denn im Anschluß an die Einlaufkammer fließt das flüssige Medium in der Bestrahlungskammer mit gleichbleibendem Pegel zur Auslaufkammer.

Während also bei der eingangs beschriebenen bekannten Vorrichtung das flüssige Medium durch einen allseits geschlossenen Kanal gepreßt wird und die Spiegelhöhe in der Bestrahlungskammer durch die Abmessungen des Kanals begrenzt ist, wird das flüssige Medium bei der Erfindung nur durch die durch die Stauwand einstellbare Ausflußöffnung geführt. Nachdem das flüssige Medium die Ausflußöffnung passiert hat, durchfließt es die Bestrahlungskammer mit einer parallel zur Sohle des offenen Gerinnes verlaufenden Spiegelhöhe, die durch das sich an den Strömungsgleichrichter anschließende Ausfluß-Leitblech vorgegeben ist.

Ein optimaler Wirkungsgrad und eine maximale Durchsatzleistung der Vorrichtung wird bei der Erfindung bei Erreichen einer Strömungsgeschwindigkeit von etwa 4 m/sec erreicht, d.h., mit einem Wechsel des flüssigen Mediums vom reinen Strömen zum sogenannten Schießen. Die Durchsatzleistung gibt die Menge des flüssigen Mediums an, die in einer Zeiteinheit die Bestrahlungskammer durchfließt.

Bei der Erfindung wird somit in neuartiger Weise die Möglichkeit geschaffen, daß das flüssige Medium die Bestrahlungskammer mit einer erhöhten Geschwindigkeit durchfließt, was zu einem erhöhten Wirkungsgrad der Vorrichtung führt, ohne daß es erforderlich ist, die Bestrahlungskammer als allseits geschlossenes Rohr auszubilden. Die mit der erfindungsgemäßen Vorrichtung in der Bestrahlungskammer erzielten hohen Geschwindigkeiten des flüssigen Mediums waren bisher bei Vorrichtungen mit einem offenen Gerinne nicht möglich.

Als ein weiterer wesentlicher Vorteil der Erfindung ist zu erwähnen, daß die Abmessungen der Stauwand in dem offenen Gerinne so gewählt sind, daß bei extrem großen Mengen des flüssigen Mediums, wie sie z.B. bei Hochwasser und bei starkem Regen auftreten können, eine Überflutung der Vorrichtung erfolgen kann, indem die große Flüssigkeitsmenge über die obere Überfall-Kante der Stauwand in der Einlaufkammer überfällt und über die Bestrahlungskammer in die Auslaufkammer gelangt. Gemäß einer zweckmäßigen Ausgestaltung der Erfindung endet nämlich die obere Kante der Stauwand unterhalb der oberen Kante des Gerinnes, so daß das flüssige Medium über die Überfall-Kante der Stauwand fließen und über die Bestrahlungskammer in die Auslaufkammer gelangen kann.

Eine weitere zweckmäßige Ausgestaltung der Erfindung sieht vor, daß in der Auslaufkammer vertikal zur Fließrichtung des Mediums ein verstellbares und arretierbares Wehr vorgesehen ist. Die Abmessungen des Wehres sind so gewählt, daß das Wehr den Querschnitt des Gerinnes in Höhe der vorderen Ausflußöffnung abdecken kann, wobei die untere Kante des Wehres sich im Abstand von der Sohle des Gerinnes befindet. Die untere Kante des Wehres kann in Abhängigkeit der Durchsatzleistung bzw. der Strömungsgeschwindigkeit des flüssigen Mediums entweder nach unten gegen die Gerinne-Sohle oder nach oben bis in die Höhe der vorderen Ausflußöffnung bewegt und arretiert werden.

Dieses Wehr ist in solchen Fällen von besonderem Vorteil, in denen die Menge bzw. die Durchsatzleistung des anfallenden flüssigen Mediums so gering ist, daß es in der Einlaufkammer nicht zu einem Anstau des flüssigen Mediums durch die Stauwand kommt. Zwischen der unteren Kante des Wehres und der Sohle wird eine Abflußöffnung gebildet, und das vertikal verstellbare Wehr bietet eine Möglichkeit, diese Abflußöffnung derart einzustellen, daß trotz der geringen Menge des flüssigen Mediums ein Stau erfolgen kann. Dieser Stau wirkt sich dahingehend aus, daß in der Bestrahlungskammer eine ausreichend große Spiegelhöhe des flüssigen Mediums erreicht wird, wobei die Spiegelhöhe so groß ist, daß die oberen in der Bestrahlungskammer angeordneten UV-Strahlenlampen stets von dem flüssigen Medium umgeben sind, so daß diese UV-Strahlenlampen nicht trocken liegen. Dadurch läßt sich erreichen, daß sämtliche in der Bestrahlungskammer befindlichen UV-Strahlenlampen auch bei geringen Mengen des flüssigen Mediums in Betrieb bleiben können und der gute Wirkungsgrad der Vorrichtung erhalten bleibt.

Gemäß einer weiteren zweckmäßigen Ausgestaltung der Erfindung tritt das Wehr bei kleinen Durchsatzleistungen mit Strömungsgeschwindigkeiten von kleiner 1 m/sec, d. h., bei Absinken des Flüssigkeits-Spiegels unter die Höhe des Ausfluß-Leitbleches in Funktion. In diesem Fall staut sich das flüssige Medium vor dem Wehr und damit auch in der Bestrahlungskammer, wodurch der Flüssigkeits-Spiegel des flüssigen Mediums in der Bestrahlungskammer groß genug bleibt, daß alle UV-Strahlenlampen von dem Medium umspült sind.

Besonders zweckmäßig ist es, daß die untere Kante des Wehres sägezahnförmig ausgebildet ist. Wenn die untere Kante nicht gerade, sondern sägezahnförmig verläuft, tritt bei einsetzender Funktion des Wehres der Anstau beruhigt und langsam und nicht sofort ein, so daß die Strömungsverhältnisse in der Bestrahlungskammer wenig gestört werden und im wesentlichen konstant bleiben.

Gemäß einer weiteren vorteilhaften Ausgestaltung der Erfindung sind die UV-Strahlenlampen innerhalb der Bestrahlungskammer durch Quecksilber-Mitteldruckentladungslampen gebildet. Solche Quecksilber-Mitteldruckentladungslampen besitzen eine hohe Strahlungsleistung und eignen sich somit besonders zur UV-Bestrahlung des flüssigen Mediums unter Berücksichtigung des Umstandes, daß das flüssige Medium bei der Erfindung die Bestrahlungskammer mit großen Geschwindigkeiten durchfließt.

Besonders zweckmäßig ist es dabei, wenn die Quecksilber-Mitteldruckentladungslampen einen Durchmesser von mindestens 18 mm besitzen und wenn der Durchmesser der die Quecksilber-Mitteldruckentladungslampen umhüllenden Schutzrohre mindestens um den Faktor 2,2 größer ist. In Versuchen hat sich herausgestellt, daß der Wirkungsgrad der Vorrichtung bei diesen Abmessungen der UV-Strahlenlampen besonders günstig ist.

Trotz der hohen Geschwindigkeiten des flüssigen Mediums in der Bestrahlungskammer lassen sich bei der Erfindung in einer anderen zweckmäßigen Ausgestaltung aber auch UV-Strahlenlampen verwenden, die durch Quecksilber-Niederdruckentladungslampen gebildet sind, wobei in vorteilhafter Weise die Quecksilber-Niederdruckentladungslampen einen Durchmesser von mindestens 25 mm besitzen, und wobei der Durchmesser, der die Quecksilber-Niederdruckentladungslampen umhüllenden Schutzrohre mindestens um den Faktor 1,7 größer ist. In umfangreichen Versuchen, wurde bestätigt, daß in einem solchen Fall mit Vorteil bei der erfindungsgemäßen Vorrichtung auch Quecksilber-Niederdruckentladungslampen eingesetzt werden können.

In Hinblick auf das Verfahren zur UV-Bestrahlung flüssiger Medien erfolgt die Lösung der der Erfindung zugrunde liegenden Aufgabe durch die Merkmale des Patentanspruchs 10.

Das erfindungsgemäße Verfahren sieht vor, daß das flüssige Medium eine solche Einlaufkammer, eine solche Bestrahlungskammer und eine solche Auslaufkammer durchfließt, welche jeweils nach Art eines oben offenen Gerinnes ausgebildet sind. Ferner wird der Flüssigkeits-Spiegel des flüssigen Medium in der Einlaufkammer derart beeinflußt und zwischen der Einlaufkammer und der Bestrahlungskammer mittels einer Stauwand derart angestaut, wobei die Stauwand den Querschnitt des Gerinnes weitgehend abdeckt und wobei die untere Kante der Stauwand sich zur Bildung einer Ausflußöffnung in einen Abstand von der Sohle des offenen Gerinnes befindet, daß die Spiegelhöhe in der Einlaufkammer ab einer Strömungsgeschwindigkeit des Mediums in der Ausflußöffnung von etwa 1 m/sec an größer ist als die Spiegelhöhe des flüssigen Mediums in der Bestrahlungstammer, und daß das flüssige Medium im Anschluß an die Eingangskammer mit gleichbleibendem Pegel zur Auslaufkammer geführt wird.

Bei der Erfindung erfolgt ein Stau des flüssigen Mediums vor der Stauwand in der Einlaufkammer, und dies hat zur Folge, daß das flüssige Medium die Bestrahlungskammer mit erhöhter Geschwindigkeit und gleichbleibendem Pegel durchfließt, wodurch der Wirkungsgrad der gesamten Vorrichtung erhöht wird.

Anhand der in der Zeichung dargestellten Ausführungsbeispiele wird die Erfindung nachfolgend näher erläutert. Es zeigen:
- Fig. 1: eine schematische Seitenansicht eines ersten Ausführungsbeispiels der Erfindung, und
- Fig. 2: eine schematische Seitenansicht des weiteren Ausführungsbeispiels der erfindungsgemäßen Vorrichtung.

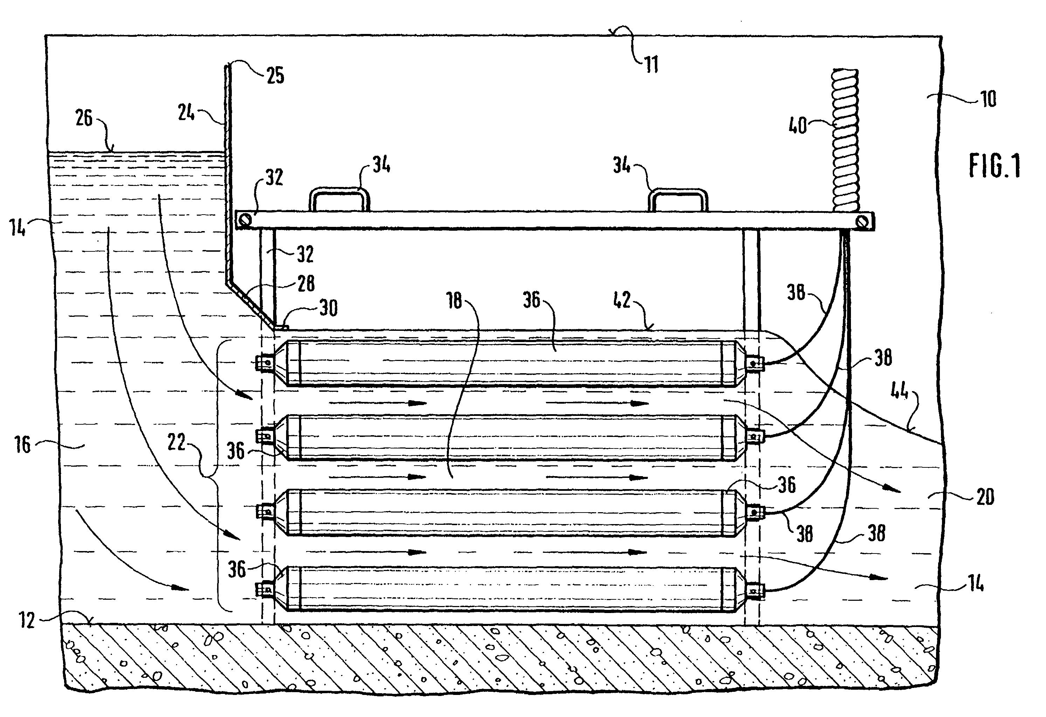

Die Vorrichtung gemäß Fig. 1. ist durch ein offenes Gerinne 10 mit rechteckigem Querschnitt gebildet. Da das Gerinne 10 nach oben offen ist, besitzt es lediglich zwei Seitenwände sowie eine Sohle 12. In dem Gerinne 10 fließt vorgereinigtes Abwasser 14, welches einer UV-Bestrahlung ausgesetzt wird.

In Strömungsrichtung des Abwassers 14 gesehen umfaßt die Vorrichtung eine Einlaufkammer 16, eine Bestrahlungskammer 18 sowie eine Auslaufkammer 20. In der Bestrahlungskammer 18 befinden sich mehrere UV-Strahlungsquellen 36, die in Reihen nebeneinander und übereinander parallel zur Fließrichtung des Abwassers 14 angeordnet sind. Zwischen den einzelnen UV-Strahlungsquellen 36 besteht jeweils ein Abstand, so daß das Abwasser 14 durch die Bestrahlungskammer 18 fließen kann und dabei einer UV-Bestrahlung ausgesetzt ist.

Die UV-Strahlungsquellen 36 bestehen in an sich bekannter Weise aus den eigentlichen UV-Strahlerlampen, die zur Abschirmung gegen das Abwasser 14 mit Schutzrohren umgeben sind, welche für UV-Strahlen durchlässig sind. Über wasserdichte Anschlüsse führen elektrische Leitungen 38 zum Betrieb der UV-Strahlerlampen über ein gemeinsames Rohr 40 zu einer nicht näher dargestellten Versorgungseinheit. Die einzelnen UV-Strahlungsquellen 36 sind in einer rahmenartigen Halterung 32 befestigt und angeordnet, und die gesamte Gruppe der UV-Strahlungsquellen 36 kann mittels Griffe 34 zusammen mit der Halterung 32 in die Bestrahlungskammer 18 eingesetzt bzw. aus dieser herausgenommen werden.

Am Eingang der Bestrahlungskammer 18 ist eine Stauwand 24 angeordnet. An ihrem unteren Ende besitzt die Stauwand 24 eine schräge Fläche 28, an die sich ein kurzes Ausfluß-Leitblech 30 anschließt, welches parallel zur Fließrichtung des Abwassers 14 und parallel zur Sohle 12 verläuft.

Die Stauwand 24 erstreckt sich senkrecht zur Zeichenebene über den gesamten Querschnitt des Gerinnes 10 und durch die untere Seite der Stauwand 24 bzw. durch den Abstand des Ausfluß-Leitbleches 30 von der Sohle 12 wird eine Ausflußöffnung 22 gebildet. Die Stauwand 24 hat die Wirkung, daß das Abwasser 14 nur durch diese Ausflußöffnung 22 in die Bestrahlungskammer 18 fließen kann. Da der Querschnitt der Ausflußöffnung 22 geringer ist als der Querschnitt des Gerinnes 10, staut sich das Abwasser 14 vor der Stauwand 24, so daß die Spiegelhöhe 26 des Abwassers 14 in der Einlaufkammer 16 höher ist als die Spiegelhöhe 42 in der Bestrahlungskammer 18. Dieser Anstau und dieser Effekt stellt sich ein, wenn die Strömungsgeschwindigkeit des Abwassers wegen größeren Mengen von Abwasser einen Wert von etwa 1 m/sec überschreitet.

Durch den Anstau des Abwassers 14 vor der Stauwand 24 bzw. durch den Druckunterschied zwischen den Spiegelhöhen 26 und 42 ergibt sich, daß das Abwasser 14 mit erhöhter Geschwindigkeit durch die Bestrahlungskammer 18 fließt. Dabei sorgt das kurze Ausfluß-Leitblech 30 dafür, daß der Spiegelhöhe 42 des Abwassers 14 in der Bestrahlungskammer 18 auf der Höhe und auf dem Niveau des Ausfluß-Leitbleches 30 bleibt, bzw. parallel zur Sohle 12 verläuft.

Nach Passieren der Bestrahlungskammer 18 gelangt das der UV-Bestrahlung ausgesetzte Abwasser 14 in die Auslaufkammer 20 und kann von dort als sauberes Abwasser ungehindert abflie**ß**en. Dabei verringert sich der Pegel bzw. die Spiegelhöhe 44 des Abwassers 14 in der Auslaufkammer gegenüber der Spiegelhöhe 42 in der Bestrahlungskammer, weil das Abwasser 14 nunmehr frei und ungehindert abfließen kann.

Beim Betrieb der Vorrichtung ist zu berücksichtigen, daß das Abwasser 14 beim Eintritt in die Bestrahlungskammer 18 auf verschiedene Hindernisse trifft, die durch die Rahmenteile 32 sowie durch die Stirnseiten der UV-Strahlungsquellen gebildet sind. Diese Teile stellen für das fließende Abwasser 14 einen Widerstand dar.

Deshalb ist es vorteilhaft, die erwähnten Teile in der Zeichnung links, also vor dem Ausfluß-Leitblech 30 anzuordnen. Dadurch wird erreicht, daß trotz dieser Teile in der Bestrahlungskammer 18 eine gleichmäßige Strömung erfolgt und daß das Strömungsprofil in der Bestrahlungskammer 18 nicht nachteilig beeinflußt wird. Wenn Teile der Halterung 32 dabei die schräge Fläche 28 durchdringen müssen, so werden in die schräge Fläche 28 entsprechende Schlitze und Öffnungen eingebracht, die man anschließend wieder abdecken kann.

Bei der soweit beschriebenen Vorrichtung gemäß Fig.1. ist vorausgesetzt, daß die Menge des anfallenden Abwassers 14 so groß ist, daß sich das Abwasser 14 vor der Stauwand 24 stauen kann, und daß es somit zu der erhöhten Geschwindigkeit des Abwassers 14 in der Bestrahlungskammer 18 kommen kann. In Trockenperioden kann jedoch auch der Fall eintreten, daß die Menge des Abwassers 14 nur gering ist, so daß kein Anstau durch die Stauwand 24 erfolgt und daß sogar die Gefahr besteht, daß die in der Bestrahlungskammer 18 oben liegenden UV-Strahlungsquellen 36 nicht von dem Abwasser 14 umgeben sind und trocken liegen.

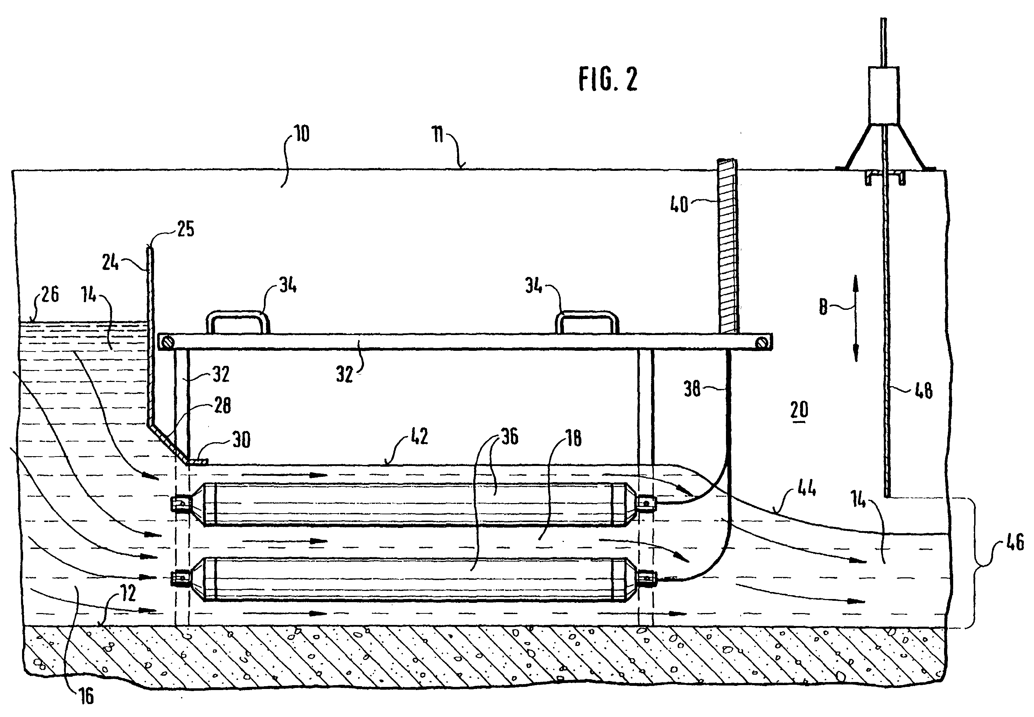

Um dies zu verhindern ist bei dem Ausführungsbeispiel der erfindungsgemäßen Vorrichtung gemäß Fig. 2 in der hinteren Auslaufkammer 20 ein Wehr 48 vorgesehen, und durch den Doppelpfeil B ist angedeutet, daß das Wehr 48 vertikal und senkrecht zur Fließrichtung des Abwassers 14 verstellbar und arretierbar ist. Ebenso wie die Stauwand 24 füllt das Wehr 48 den Querschnitt des Gerinnes 10 teilweise aus, wobei durch die untere Kante des Wehres 48 und der Sohle 12 des Gerinnes 10 eine kleine Abflußöffnung 46 verbleibt.

Bei nur geringen Mengen von Abwasser 14 läßt sich durch senkrechtes Verstellen des Wehres 48 die Abflußöffnung 46 so einstellen, daß nur wenig Abwasser 14 abfließen kann und daß es dadurch zu einem Rückstau kommt, wenn die Menge des durch die Abflußöffnung 46 abfließenden Abwassers 14 geringer als die in die Einlaufkammer 16 gelangende Menge des Abwassers 14 ist. Durch diesen Rückstau wird bewirkt, daß sich das Abwasser 14 in gewünschter Weise in der Einlaufkammer 16 vor der Stauwand 24 anstauen kann, und daß alle UV-Strahlungsquellen 36 von dem Abwasser 14 umspült sind.

Wenn sich die untere Kante des Wehres 48 oberhalb der Höhe der unteren Kante der Stauwand 24 befindet, ist das Wehr 48 praktisch außer Funktion. Dann ist nämlich die Spiegelhöhe 42 des Abwassers 14 in der Bestrahlungskammer 18 hoch genug, daß sämtliche UV-Strahlungsquellen 36 von dem Abwasser 14 umspült sind. Erst bei kleineren Durchsatzleistungen des Abwassers 14 mit Strömungsgeschwindigkeiten von kleiner als 1 m/sec, d.h., bei Absinken des Flüssigkeits-Spiegels unter die Höhe des Ausfluß-Leitbleches 30 tritt das Wehr 48 in Funktion.

Sowohl bei dem Ausführungsbeispiel der Erfindung gemäß Fig. 1 als auch gemäß Fig. 2 liegt die obere Überfall-Kante 25 der Stauwand 24 unterhalb der unteren Kante 11 des Gerinnes 10. Wenn bei sehr großen Mengen des Abwassers 14, z. B. bei Hochwasser und bei starkem Regen, eine Überflutung des Gerinnes 10 erfolgt, kann somit die große Menge des Abwassers 14 über die obere Überfall-Kante 25 der Stauwand 24 über die Bestrahlungskammer 18 in die Auslaufkammer 20 gelangen.

## Patentansprüche

1. Vorrichtung zur UV-Bestrahlung flüssiger Medien (14), insbesondere von vorgereinigtem Abwasser, wobei die Vorrichtung in Fließrichtung des flüssigen Mediums (14) gesehen eine Einlaufkammer (16), eine darauf folgende Bestrahlungskammer (18) und eine sich daran anschließende Auslaufkammer (20) aufweist, und wobei in der Bestrahlungskammer (18) UV-Strahlungsquellen (36) aus UV-Strahlerlampen mit die UV-Strahlerlampen umgebenden und gegen das flüssige Medium (14) abschirmenden Schutzrohren vorgesehen sind, die in Reihen nebeneinander und/oder übereinander parallel zur Fließrichtung des flüssigen Mediums (14) angeordnet sind, **dadurch gekennzeichnet, daß** die Vorrichtung nach Art eines oben offenen kanalartigen, vorzugsweise rechteckigen Gerinnes (10) ausgebildet ist, daß zwischen der Einlaufkammer (16) und der Bestrahlungskammer (18) quer zur Fließrichtung des flüssigen Mediums (14) eine Stauwand (24) vorgesehen ist, deren Abmessungen so gewählt sind, daß die Stauwand (24) den Querschnitt des Gerinnes (10) weitgehend abdeckt, und dessen untere Kante sich in einem Abstand von der Sohle (12) des offenen Gerinnes (10) befindet, wodurch eine Ausflußöffnung (22) für das flüssige Medium (14) von der-Einlaufkammer (16) zur Bestrahlungskammer (18) gebildet ist, daß die Größe der Ausflußöffnung (22) so bemessen ist, daß sich bei erhöhendem Durchfluß des flüssigen Mediums (14) und bei Erreichen einer Strömungsgeschwindigkeit ab 1 m/sec das flüssige Medium (14) vor der Ausflußöffnung (22) anstaut und es zu einem Flüssigkeits-Spiegel in der Einlaufkammer (16) kommt, deren Spiegelhöhe größer ist als die Spiegelhöhe des flüssigen Mediums (14) in der Bestrahlungskammer (18), daß das untere Teilstück der Stauwand (24) in Fließrichtung des flüssigen Mediums (14) im Winkel von kleiner als 90° in Fließrichtung gebogen ist, wodurch eine schräg zur Fließrichtung verlaufende Fläche (28) gebildet wird, und daß sich an die schräge Fläche (28) ein waagerecht und parallel zur Fließrichtung des flüssigen Mediums (14) verlaufendes kurzes Ausfluß-Leitblech (30) anschließt.

2. Vorrichtung nach Anspruch 1, **dadurch gekennzeichnet, daß** die obere Überfall-Kante (25) der Stauwand (24) unterhalb der oberen Kante (11) des Gerinnes (10) endet.

3. Vorrichtung nach einem der vorhergehenden Ansprüche 1-2, **dadurch gekennzeichnet, daß** in der Auslaufkammer (20) vertikal zur Fließrichtung ein verstellbares und arretierbares Wehr (48) vorgesehen ist, dessen Abmessungen so gewählt sind, daß das Wehr (48) den Querschnitt des Gerinnes (10) in Höhe der vorderen Ausflußöffnung (22) abdecken kann, und dessen untere Kante in Abhängigkeit der Durchsatzleistung bzw. Strömungsgeschwindigkeit entweder nach unten gegen die Gerinne-Sohle (12) oder nach oben bis in die Höhe der vorderen Ausflußöffnung (22) bewegt und arretiert werden kann.

4. Vorrichtung nach Anspruch 3, **dadurch gekennzeichnet, daß** das Wehr (48) bei kleinen Durchsatzleistungen mit Strömungsgeschwindigkeiten von kleiner 1 m/sec, d. h., bei Absinken des Flüssigkeits-Spiegels unter das Ausfluß-Leitblech (30) in Funktion tritt.

5. Vorrichtung nach Anspruch 3 und/oder 4, **dadurch gekennzeichnet, daß** die untere Kante des Wehres (48) sägezahnförmig ausgebildet ist.

6. Vorrichtung nach einem der vorhergehenden Ansprüche 1 - 5, **dadurch gekennzeichnet, daß** die UV-Strahlenlampen durch Quecksilber-Mitteldruckentladungslampen gebildet sind.

7. Vorrichtung nach Anspruch 6, **dadurch gekennzeichnet, daß** die Quecksilber-Mitteldruckentladungslampen einen Durchmesser von mindestens 18 mm besitzen, und daß der Durchmesser der die Quecksilber-Mitteldruckentladungslampen umhüllenden Schutzrohre mindestens um den Faktor 2,2 größer ist.

8. Vorrichtung nach einem der vorhergehenden Ansprüche 1 - 5, **dadurch gekennzeichnet, daß** die UV-Strahlerlampen durch Quecksilber-Niederdruckentladungslampen gebildet sind.

9. Vorrichtung nach Anspruch 8, **dadurch gekennzeichnet, daß** die Quecksilber-Niederdruckentladungslampen einen Durchmesser von mindestens 25 mm besitzen, und daß der Durchmesser der die Quecksilber-Niederdruckentladungslampen umhüllenden Schutzrohre mindestens um den Faktor 1,7 größer ist.

10. Verfahren zur UV-Bestrahlung flüssiger Medien, insbesondere von vorgereinigtem Abwasser, wobei das flüssige Medium nacheinander eine Einlaufkammer, eine Bestrahlungskammer und eine Auslaufkammer durchfließt, und wobei in der Bestrahlungskammer UV-Strahlungsquellen aus UV-Strahlerlampen mit die UV-Strahlerlampen umgebenden und gegen das flüssige Medium abschirmenden Schutzrohren versehen sind, die in Reihen nebeneinander und/oder übereinander parallel zur Fließrichtung des flüssigen Mediums angeordnet sind, **dadurch gekennzeichnet, daß** das flüssige Medium eine solche Einlaufkammer, eine solche Bestrahlungskammer und eine solche Auslaufkammer durchfließt, welche jeweils nach Art eines oben offenen Gerinnes ausgebildet sind, daß der Flüssigkeits-Spiegel des flüssigen Mediums in der Einlaufkammer so beeinflußt und zwischen der Einlaufkammer und der Bestrahlungskammer mittels einer Stauwand angestaut wird, welche den Querschnitt des Gerinnes weitgehend abdeckt, und dessen untere Kante sich zur Bildung einer Ausflußöffnung in einem Abstand von der Sohle des offenen Gerinnes befindet, daß die Spiegelhöhe in der Einlaufkammer ab einer Strömungsgeschwindigkeit des Mediums in der Ausflußöffnung von etwa 1 m/sec an größer ist als die Spiegelhöhe des flüssigen Mediums in der Bestrahlungskammer, und daß das flüssige Medium im Anschluß an die Eingangskammer mit gleichbleibendem Pegel zur Auslaufkammer geführt wird.

## Claims

1. Apparatus for the UV irradiation of liquid media (14), particularly of precleaned waste water, in which, considered in the flow direction of the liquid medium (14), the apparatus has an inlet chamber (16), a following irradiation chamber (18) and a following outlet chamber (20) and in which the irradiation chamber (18) contains UV radiation sources (36) constituted by UV lamps with protective tubes surrounding the UV lamps and shielding against the liquid medium (14), said tubes being juxtaposed and/or superimposed in rows parallel to the flow direction of the liquid medium (14), **characterized in that** the apparatus is constructed in the manner of a top-open, channel-like, preferably rectangular gutter (10), that between the inlet chamber (16) and the irradiation chamber (18) a baffle plate (24) is provided transversely to the flow direction of the liquid medium (14) and whose dimensions are chosen in such a way that the baffle plate (24) largely covers the cross-section of the gutter (10) and whose lower edge is spaced from the base (12) of the open gutter (10), so that an outflow opening (22) is formed for the liquid medium (14) from the inlet chamber (16) to the irradiation chamber (18), that the size of the outflow opening (22) is dimensioned in such a way that with an increasing through-flow of the liquid medium (14) and on reaching a flow rate as from 1 m/sec the liquid medium (14) dams up in front of the outflow opening (22) and the liquid level obtained in the inlet chamber (16) is higher than the level of the liquid medium (14) in the irradiation chamber (18), that, considered in the flow direction of the liquid medium (14), the lower portion of the baffle plate (24) is bent at an angle smaller than 90° in the flow direction, so that a surface (28) inclined to the flow direction is formed and that to the inclined surface (28) is connected a horizontal, short outflow deflector (30) parallel to the flow direction of the liquid medium (14).

2. Apparatus according to claim 1, **characterized in that** the upper overflow edge (25) of the baffle plate (24) terminates below the upper edge (11) of the gutter (10).

3. Apparatus according to one of the preceding claims 1 and 2, **characterized in that** an adjustable, arrestable weir (48) is provided in the outlet chamber (20) vertically with respect to the flow direction and whose dimensions are selected in such a way that the weir (48) can cover the cross-section of the gutter (10) level with the front outflow opening (22) and its lower edge, as a function of the throughput capacity or flow rate, can be moved and arrested either upwards against the gutter base (12) or upwards to the level of the front outflow opening (22).

4. Apparatus according to claim 3, **characterized in that**, in the case of small throughput capacities with flow rates lower than 1 m/sec, i.e. when the liquid level drops below the outflow deflector (30), the weir (48) comes into operation.

5. Apparatus according to claim 3 and/or 4, **characterized in that** the lower edge of the weir (48) has a sawtooth-like construction.

6. Apparatus according to one of the preceding claims 1 to 5, **characterized in that** the UV lamps are formed by medium pressure mercury lamps.

7. Apparatus according to claim 6; **characterized in that** the medium pressure mercury lamps have a diameter of at least 18 mm and that the diameter of the protective tubes enveloping the medium pressure mercury lamps is larger by at least a factor of 2.2.

8. Apparatus according to one of the preceding claims 1 to 5, **characterized in that** the UV lamps are formed by low pressure mercury lamps.

9. Apparatus according to claim 8, **characterized in that** the low pressure mercury lamps have a diameter of at least 25 mm and that the diameter of the protective tubes enveloping the low pressure mercury lamps is larger by a factor of at least 1.7.

10. Method for the UV irradiation of liquid media, particularly precleaned waste water, the liquid medium successively flowing through an inlet chamber, an irradiation chamber and an outlet chamber, and in which the irradiation chamber contains UV radiation sources constituted by UV lamps with protective tubes surrounding the UV lamps and shielding against the liquid medium, said tubes being juxtaposed and/or superimposed in rows parallel to the flow direction of the liquid medium, **characterized in that** the liquid medium flows through such an inlet chamber, such an irradiation chamber and such an outlet chamber, which are in each case constructed in the manner of a top-open gutter, that the liquid level of the liquid medium in the inlet chamber is so influenced and between the inlet chamber and the irradiation chamber is so dammed up by means of a baffle plate, which substantially covers the cross-section of the gutter and whose lower edge, for forming an outflow opening, is spaced from the base of the open gutter, that the level in the inlet chamber, as from a medium flow rate in the outflow opening of approximately 1 m/sec is higher than the level of the liquid medium in the irradiation chamber, and **in that** following on to the inlet chamber, the liquid medium is passed with a constant level to the outlet chamber.

## Revendications

1. Dispositif d'exposition de liquides (14), notamment d'eaux usées prétraitées, aux rayons UV, le dispositif présentant une chambre d'admission (16) vue dans la direction du courant du liquide (14), une chambre de rayonnement (18), en aval, et une chambre d'évacuation (20) qui termine, et dans lequel, dans la chambre de rayonnement (18), sont installées des sources de rayons (36) entourées de rayons UV avec les lampes à rayons UV et pourvues, contre le liquide (14), de tubes de protection qui sont juxtaposés en rangées et/ou superposés parallèlement au sens du courant du liquide (14), **caractérisé en ce que** le dispositif est conçu comme un canal (10), ouvert vers le haut, de préférence d'allure parallélépipédique, **en ce qu'**entre la chambre d'admission (16) et la chambre de rayonnement (18), perpendiculairement au sens du courant du liquide (14), est prévue une paroi de retenue (24) dont les dimensions ont été choisies de façon à ce qu'elle couvre au maximum la largeur de la section du canal (10), et dont le bord inférieur se trouve à une certaine distance du fond (12) du canal (10) ouvert, une ouverture d'évacuation (22) pour le liquide (14) de la chambre d'admission (16) étant créée vers la chambre de rayonnement (18), **en ce que** la taille de l'ouverture d'évacuation (22) est dimensionnée de façon qu'en cas d'augmentation du courant de liquide (14) et si la vitesse de courant dépasse 1 m/sec, le liquide (14) s'accumule devant l'ouverture d'évacuation (22) et atteint un niveau de liquide, dans la chambre d'admission (16), dont la hauteur de niveau est supérieure à la hauteur du niveau du liquide (14) dans la chambre de rayonnement (18), **en ce que** la partie inférieure de la paroi de retenue (24) est coudée dans le sens du courant du liquide (14) d'un angle inférieur à 90°, dans le sens du courant, en formant une surface (28) en pente dans le sens du courant, et **en ce que** la surface en pente (28) se termine par une courte tôle-guide d'écoulement (30), horizontale et parallèle au sens du courant du liquide (14).

2. Dispositif suivant la revendication 1, **caractérisé en ce que** le bord supérieur de décharge (25) de la paroi de retenue (24) se termine sous le bord supérieur (11) du canal (10).

3. Dispositif suivant l'une des revendications précédentes 1 et 2, **caractérisé en ce que**, dans la chambre d'évacuation (20), est prévu, verticalement par rapport au sens du courant, un déversoir d'arrêt (48), réglable et qui peut bloquer, dont les dimensions sont choisies de façon que le déversoir (48) peut couvrir la section du canal (10) à hauteur de l'ouverture antérieure d'évacuation (22) et dont le bord inférieur peut être mobile et bloqué suivant le débit ou la vitesse du courant, ou vers le bas contre le fond (12) du canal ou vers le haut jusqu'à la hauteur de l'ouverture antérieure d'évacuation (22).

4. Dispositif suivant la revendication 3, **caractérisé en ce que** le déversoir (48), en cas de petits débits de passage avec des vitesses de courant de moins d'un m/sec, c'est-à-dire en cas de descente du niveau de liquide sous la tôle-guide d'écoulement (30), entre en fonction.

5. Dispositif suivant la revendication 3 et/ou 4, **caractérisé en ce que** le bord inférieur du déversoir (48) est en forme de dents de scie.

6. Dispositif suivant l'une des revendications précédentes 1 à 5, **caractérisé en ce que** les lampes de rayonnement UV sont réalisées en lampes à décharge à moyenne pression à mercure.

7. Dispositif suivant la revendication 6, **caractérisé en ce que** les lampes à décharge à moyenne pression à mercure ont un diamètre d'au moins 18 mm et **en ce que** le diamètre des tubes de protection entourant les lampes à décharge à moyenne pression à mercure est supérieur d'au moins dans un facteur 2,2.

8. Dispositif suivant l'une des revendications précédentes 1 à 5, **caractérisé en ce que** les lampes de rayonnement UV sont formées par des lampes à décharge à basse pression à mercure.

9. Dispositif suivant la revendication 8, **caractérisé en ce que** les lampes à décharge à basse pression à mercure ont un diamètre d'au moins 25 mm et **en ce que** le diamètre des tubes de protection entourant les lampes à décharge à basse pression à mercure est supérieur d'au moins un facteur 1,7.

10. Procédé d'irradiation aux UV de milieux liquides, notamment d'eaux usées prétraitées, le milieu liquide traversant nécessairement une chambre d'admission, une chambre d'irradiation et une chambre d'évacuation, la chambre d'irradiation étant pourvue de sources UV, les sources UV étant constituées de lampes UV protégées du milieu liquide par des tubes de protection et étant disposés ou rangés les uns à côté des autres et/ou les uns au dessus des autres parallèlement à la direction d'écoulement du milieu liquide, **caractérisé en ce que** le milieu liquide traverse ladite chambre d'admission, ladite chambre d'irradiation, ladite chambre d'évacuation, chacune étant construite sur le modèle d'un canal ouvert vers le haut et **en ce que** le niveau de liquide dans la chambre d'admission est influencé et retenu par une paroi de barrage entre la chambre d'admission et la chambre d'irradiation, obstruant en grande partie la section du canal, le bord inférieur de la paroi étant situé à une certaine distance du fond du canal de manière à former une ouverture d'écoulement, de sorte que le niveau de liquide dans la chambre d'irradiation à partir d'une vitesse d'écoulement d'environ 1 m/s et que le niveau de liquide soit constant entre la sortie et la chambre d'admission et l'entrée de la chambre d'évacuation.
